# EUROPEAN PATENT APPLICATION

(11) **EP 2 980 953 A2**
(43) Date of publication of application: **03.02.2016**
(21) Application number: 14188478.3
(22) Date of filing: 10.10.2014
(51) Int. Cl.: H02J 7/00

(54) **Quick low-voltage rechargeable battery**

(30) Priority: 01.08.2014 TW 103126384
(71) Applicant: Giga-Byte Technology Co., Ltd., New Taipei City 231 (TW)
(72) Inventor: Ma, Mou-Ming, 231 New Taipei City (TW)
(74) Representative: Cabinet Chaillot

(57) **Abstract**

A quick low-voltage rechargeable battery is switched between a charging mode and a discharging mode. The battery includes plural battery cells and a power management circuit. Each battery cell includes a battery positive terminal and a battery negative terminal. The battery positive terminal of each battery cell corresponds to the battery negative terminal of another battery cell sequentially, so as to constitute a battery cell sequence. Respectively, the battery cells connect the power management circuit. The power management circuit includes a loading positive terminal and a loading negative terminal used to connect to a load. In the discharging mode, the power management circuit switches the battery cells to a series connection state; in the charging mode, the power management circuit switches the battery cells to respectively connect to a charging source and to be charged, and the battery cells are not connected in series.

## Description

### BACKGROUND

### Technical Field

This disclosure relates to a secondary battery, and in particular, to a quick low-voltage rechargeable battery.

### Related Art

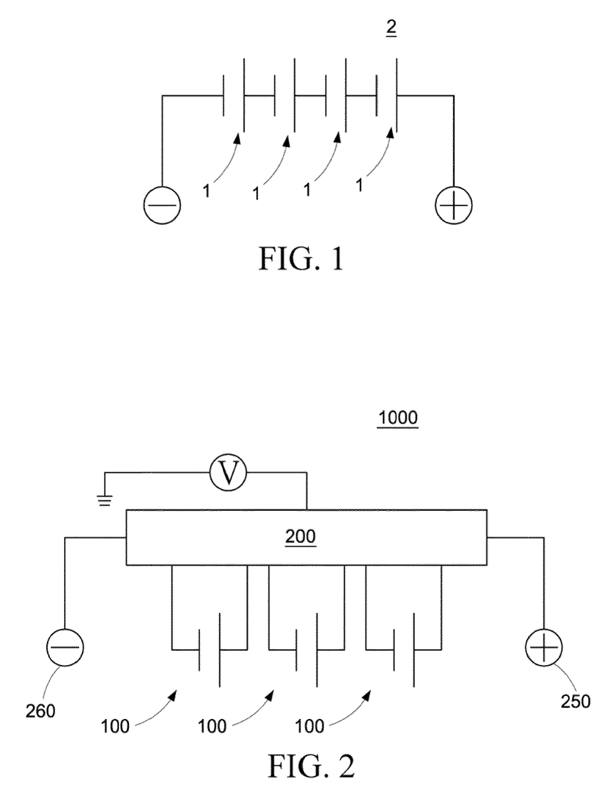

As shown in FIG. 1, the so-called battery, except a dry cell, is in fact a battery cell group 2 formed by multiple battery cells 1 in series connection. An individual battery cell 1 has a fixed output voltage level, and has a fixed maximum output current. If the output voltage level and the maximum output current of the battery need to be increased, multiple battery cells 1 must be connected in series to form the battery cell group 2, so that the output voltage level and the maximum output current of the battery cell 1 can be accumulated to obtain a sufficient output voltage level and maximum output current.

For example, an output voltage level of a common nickel-metal hydride battery cell is 1.2 V, and a maximum output current thereof is about 1 ampere (1 A). If 10 nickel-metal hydride battery cells are connected in series and encapsulated into a single battery cell group, an output voltage level of 12 V and a maximum output current of 10 A can be obtained. However, a charge current must be directly applied to the whole series circuit when the aforementioned battery cell group is charged, so the charge potential must be greater than 12 V. Moreover, since the series circuit by itself generates a relatively large impedance, the charge time is prolonged, and the prolonged time is much greater than the time for charging a single battery cell 1.

### SUMMARY

In view of the foregoing problems, this disclosure provides a quick low-voltage rechargeable battery, which can be charged quickly with a relatively low voltage.

This disclosure provides a quick low-voltage rechargeable battery, which can switch between a charging mode and a discharging mode. The quick low-voltage rechargeable battery includes plural battery cells and a power management circuit. Each battery cell includes a battery positive terminal and a battery negative terminal, where the battery cells are in sequence, with battery positive terminals being corresponding to battery negative terminals, to form a battery cell sequence. The battery cells are separately connected to the power management circuit, and the power management circuit includes a loading positive terminal and a loading negative terminal, where the loading positive terminal and the loading negative terminal are used to connect to a load. In a discharging mode, the power management circuit switches the battery cells to a series connection state and to connect to the loading positive terminal and the loading negative terminal; in a charging mode, the power management circuit switches the battery cells to separately connect to a charging source and to be charged, and the battery cells are not connected in series.

In one or more embodiments, the power management circuit includes plural first switching units and plural second switching units. The battery positive terminal of each battery cell is connected to one of the first switching units, and the first switching unit optionally switches and connects to the battery negative terminal of a previous battery cell in the battery cell sequence, the loading positive terminal, or an output terminal of the charging source; the battery negative terminal of each battery cell is connected to one of the second switching units, and the second switching unit is capable of switching the battery negative terminal to be electrically grounded or not electrically grounded.

In one or more embodiments, in the discharging mode, the first switching unit corresponding to the battery positive terminal of each battery cell switches and connects to the battery negative terminal of a previous battery cell in the battery cell sequence or the loading positive terminal; and the second switching unit corresponding to the battery negative terminal of each battery cell switches the battery negative terminal to be not electrically grounded, so that the battery cell sequence is in a series connection state and is connected to the loading positive terminal and the loading negative terminal.

In the charging mode, the first switching unit corresponding to the battery positive terminal of each battery cell switches and connects to the output terminal of the charging source; and the second switching unit corresponding to the battery negative terminal of each battery cell switches the battery negative terminal to be electrically grounded.

In one or more embodiments, the quick low-voltage rechargeable battery further includes a switcher, configured to control switching between the first switching unit and the second switching unit.

In one or more embodiments, the quick low-voltage rechargeable battery normally maintains the discharging mode, and the switcher is an automatic switcher, configured to control actuation of the first switching unit and the second switching unit when the switcher is triggered by the output terminal of the charging source, so as to switch the quick low-voltage rechargeable battery to the charging mode.

In this disclosure, in the charging mode, the battery cells are separately connected to the charging source, which is equivalent to a state that a single battery cell is charged. Moreover, the impedance of a single battery cell is low, so that the quick low-voltage rechargeable battery can complete the charge with a relatively low charge voltage within a relatively short time. Also, in the discharging mode, the battery cells can be connected in series to maintain a required high voltage output.

### BRIEF DESCRIPTION OF THE DRAWINGS

FIG. 1 is a circuit diagram of a battery in the art;
FIG. 2 is a block diagram according to an embodiment of this disclosure;
FIG. 3 is a circuit diagram according to an embodiment of this disclosure;
FIG. 4 is a diagram showing that the circuit of FIG. 3 is switched to a discharging mode; and
FIG. 5 is a diagram showing that the circuit of FIG. 3 is switched to a charging mode.

### DETAILED DESCRIPTION

Referring to FIG. 2, a quick low-voltage rechargeable battery 1000 disclosed by an embodiment of this disclosure can switch between a charging mode and a discharging mode. The quick low-voltage rechargeable battery 1000 includes plural battery cells 100 and a power management circuit 200. The battery cells 100 are separately connected to the power management circuit 200. The power management circuit 200 includes a loading positive terminal 250 and a loading negative terminal 260, where the loading positive terminal 250 and the loading negative terminal 260 are used to connect to a load, so as to provide voltage and current outputs.

When the quick low-voltage rechargeable battery 1000 is installed to an apparatus that needs power supply, the quick low-voltage rechargeable battery 1000 is switched to a discharging mode, and the loading positive terminal 250 and the loading negative terminal 260 are connected to a load provided by the apparatus. In the discharging mode, the power management circuit 200 switches the battery cells 100 to a series connection state and to connect to the loading positive terminal 250 and the loading negative terminal 260, so that the battery cells 100 can provide a maximum voltage and a maximum current.

When the power management circuit 200 is connected to a charging source V, the quick low-voltage rechargeable battery 1000 is switched to a charging mode; in this case, the power management circuit 200 switches the battery cells 100 to separately connect to the charging source V and to be charged, and the battery cells 100 are not connected in series. In this case, since the battery cells 100 are separately charged instead of being charged in a series connection state, and the impedance of the battery cell 100 is relatively low, which is equivalent to a state that a single battery cell 100 is charged, the quick low-voltage rechargeable battery 1000 can complete the charge within a relatively short time.

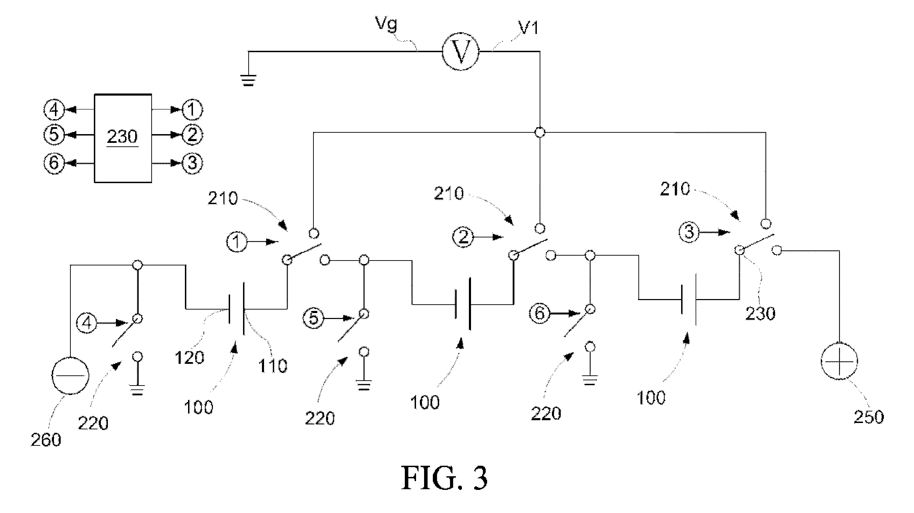

Referring to FIG. 3, the power management circuit 200 includes plural first switching units 210 and plural second switching units 220. Also, the charging source V includes an output terminal V1 and a grounding end Vg.

As shown in FIG. 3, each battery cell 100 includes a battery positive terminal 110 and a battery negative terminal 120; the battery cells 100 are in sequence, with battery positive terminals being corresponding to battery negative terminals, to form a battery cell sequence. Each battery cell 100 is separately allocated to a first switching unit 210 and a second switching unit 220.

As shown in FIG. 3, the battery positive terminal 110 of each battery cell 100 is connected to one of the first switching units 210, and the first switching unit 210 optionally switches and connects to the battery negative terminal 120 of a previous battery cell 100 in the battery cell sequence, the loading positive terminal 250, or the output terminal V1 of the charging source V, so that the battery positive terminal 110 of the battery cell 100 optionally connects to the battery negative terminal of a previous battery cell 100 in the battery cell sequence, the loading positive terminal 250, or the output terminal V1 of the charging source V.

As shown in FIG. 3, the battery negative terminal 120 of each battery cell 100 is connected to one of the second switching units 220, and the second switching unit 220 may switch the battery negative terminal 120 to be electrically grounded or not electrically grounded.

As shown in FIG. 3, the power management circuit 200 further includes a switcher 230, configured to control switching between the first switching unit 210 and the second switching unit 220. The switcher 230 may be a manual switcher, and the switcher 230 may also be an automatic switcher which is triggered by the charging source V to execute a switching operation.

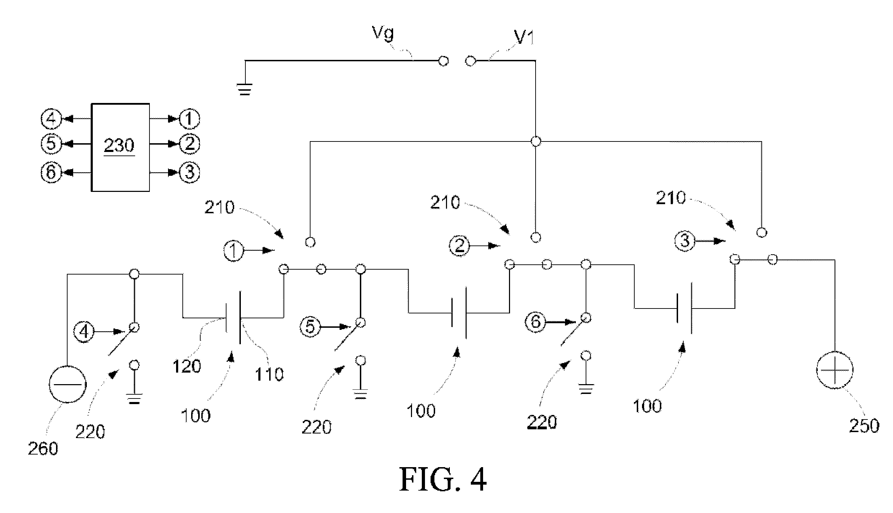

Referring to FIG. 4, the quick low-voltage rechargeable battery 1000 is normally in a discharging mode. In the discharging mode, the quick low-voltage rechargeable battery 1000 is not connected to the charging source V and can be connected to a load at any time and discharge.

As shown in FIG. 4, in the discharging mode, the first switching unit 210 corresponding to the battery positive terminal of each battery cell 100 switches and connects to the battery negative terminal 120 of a previous battery cell 100 in the sequence or the loading positive terminal 250, so that the battery positive terminal 110 of the battery cell 100 is connected to the battery negative terminal of a previous battery cell 100 in the battery cell sequence or the loading positive terminal 250. Meanwhile, the second switching unit 220 corresponding to the battery negative terminal 120 of each battery cell 100 switches the battery negative terminal 120 to be not electrically grounded. In this case, the battery cell sequence is in a series connection state, and the battery cell sequence is connected to the loading positive terminal 250 and the loading negative terminal 260 to provide high voltage and large current outputs.

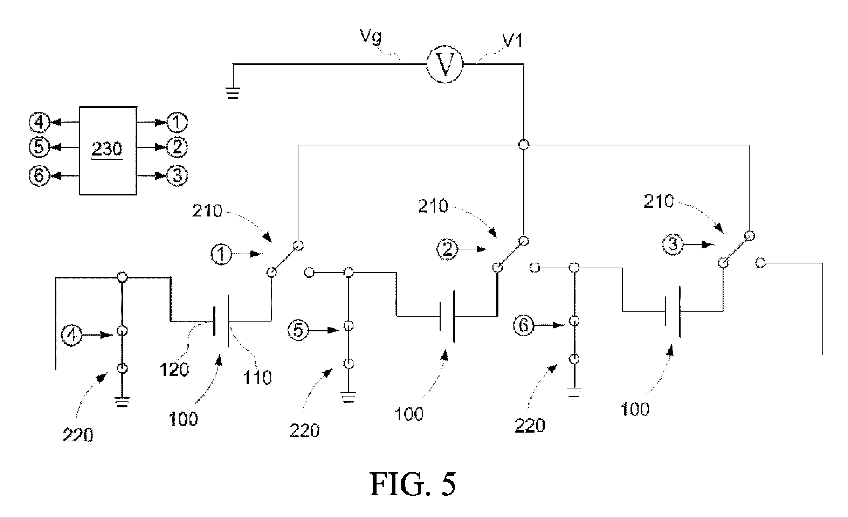

As shown in FIG. 5, in the charging mode, the first switching unit 210 corresponding to the battery positive terminal of each battery cell 100 switches and connects to the output terminal V1 of the charging source V, so that the battery positive terminal 110 of the battery cell 100 is connected to the output terminal V1 of the charging source V. Meanwhile, the second switching unit 220 corresponding to the battery negative terminal 120 of each battery cell 100 switches the battery negative terminal 120 to be electrically grounded. In this case, the battery cells 100 in the battery cell sequence are separately connected to the charging source V, so that the battery cells 100 are separately charged and can be charged with a relatively low voltage.

In a specific embodiment, the quick low-voltage rechargeable battery 1000 normally maintains the discharging mode, and the switcher 230 is an automatic switcher which can be triggered by the output terminal V1 of the charging source V. When the switcher 230 receives the output terminal V1 of the charging source V, the switcher 230 controls actuation of the first switching unit 210 and the second switching unit 220, so that the quick low-voltage rechargeable battery 1000 is switched to the charging mode.

In this disclosure, in the charging mode, the battery cells 100 are separately connected to the charging source, which is equivalent to a state that a single battery cell 100 is charged. Moreover, the impedance of a single battery cell is low, so that the quick low-voltage rechargeable battery 1000 can complete the charge within a relatively short time. Also, in the discharging mode, the battery cells 100 can be connected in series to maintain a required high voltage output.

## Claims

1. A quick low-voltage rechargeable battery for being switched between a charging mode and a discharging mode, comprising:
a plurality of battery cells, wherein each battery cell includes a battery positive terminal and a battery negative terminal; the battery cells are in sequence, with battery positive terminals corresponding to battery negative terminals, to form a battery cell sequence; and
a power management circuit, wherein the battery cells are respectively connected to the power management circuit, and the power management circuit includes a loading positive terminal and a loading negative terminal, wherein the loading positive terminal and the loading negative terminal are used to connect to a load,
wherein in a discharging mode, the power management circuit switches the battery cells to a series connection state and to connect to the loading positive terminal and the loading negative terminal; in a charging mode, the power management circuit switches the battery cells to separately connect to a charging source and to be charged, and the battery cells are not connected in series.

2. The quick low-voltage rechargeable battery as claimed in Claim 1, wherein the power management circuit comprises:
a plurality of first switching units, wherein the battery positive terminal of each battery cell is connected to one of the first switching units, and the first switching unit optionally switches and connects to the battery negative terminal of a previous battery cell in the battery cell sequence, the loading positive terminal, or an output terminal of the charging source; and
a plurality of second switching units, wherein the battery negative terminal of each battery cell is connected to one of the second switching units, and the second switching unit is capable of switching the battery negative terminal to be electrically grounded or not electrically grounded.

3. The quick low-voltage rechargeable battery as claimed in Claim 2, wherein:
in the discharging mode, the first switching unit corresponding to the battery positive terminal of each battery cell switches and connects to the battery negative terminal of a previous battery cell in the battery cell sequence or the loading positive terminal; and the second switching unit corresponding to the battery negative terminal of each battery cell switches the battery negative terminal to be not electrically grounded, so that the battery cell sequence is in a series connection state and is connected to the loading positive terminal and the loading negative terminal; and
in the charging mode, the first switching unit corresponding to the battery positive terminal of each battery cell switches and connects to the output terminal of the charging source; and the second switching unit corresponding to the battery negative terminal of each battery cell switches the battery negative terminal to be electrically grounded.

4. The quick low-voltage rechargeable battery as claimed in Claim 3, further comprising a switcher, configured to control switching between the first switching unit and the second switching unit.

5. The quick low-voltage rechargeable battery as claimed in Claim 4, wherein the quick low-voltage rechargeable battery normally maintains the discharging mode, and the switcher is an automatic switcher, configured to control actuation of the first switching unit and the second switching unit when the switcher is triggered by the output terminal of the charging source, so as to switch the quick low-voltage rechargeable battery to the charging mode.
